Europäisches Patentamt

**European Patent Office**

Office européen des brevets

(11) Publication number: **0 007 776**

A1

(12) # EUROPEAN PATENT APPLICATION

(21) Application number: **79301431.7**

(22) Date of filing: **18.07.79**

(51) Int. Cl.³: **B 21 J 9/18**
**B 21 J 15/22, B 30 B 1/16**

(30) Priority: **20.07.78 GB 3049878**

(43) Date of publication of application:
**06.02.80 Bulletin 80.3**

(84) Designated Contracting States:
**DE FR IT**

(71) Applicant: **OCEAN INVESTMENTS (GIBRALTAR) LIMITED**
**3, Bell Lane**
**Gibraltar(GB)**

(72) Inventor: **Tarbuck, Graham**
**28 Wootton Road**
**Finchfield, Wolverhampton West Midlands(GB)**

(74) Representative: **Collingwood, Anthony Robert et al,**
**GEORGE FUERY & COMPANY St Martin's House Bull Ring**
**Birmingham B5 5EY(GB)**

(54) **Press for installing fasteners in workpieces.**

(57) A machine such as an injection moulding machine or a press for installing fasteners into workpieces has a ram (10) coupled to a hydraulic piston and cylinder (16) via a toggle linkage (22,24) which is movable by a pneumatically controlled piston and cylinder (14) between a folded condition and a substantially collinear condition. Such movement of the toggle (22,24) advances or retracts the ram (10) towards or away from an anvil (18). The toggle (22,24) can transmit force from the cylinder (16) to the ram (10) only when the toggle (22,24) is in the collinear condition and hence when the ram (10) is in close proximity or contact with the anvil (18). In this way, the operators hands are safeguarded without the need for the provision of a machine guard.

Fig 2

EP 0 007 776 A1

Croydon Printing Company Ltd

1.

DESCRIPTION

PRESS FOR INSTALLING FASTENERS IN WORKPIECES

This invention relates to machines of the kind which comprise a first working member mounted on the machine for movement towards and away from a second working member, the first member being movable axially from a remote position to a position in which it is in close proximity or contact with said second member, and force applying means operable when the first member is in close proximity or contact with said second member to apply a large force to said first working member, which force acts axially in a direction towards said second member. The invention is applicable to various machines of this kind, for example injection moulding machines, but is especially applicable to presses for installing fasteners in workpieces, e.g. for inserting self-piercing and self-clinching rivets into an assembly of metal sheets as described in our prior British Patent No.1471466 to which reference should be made for further details.

Such presses generally comprise a ram which executes a working stroke while the workpiece is supported by an anvil. In order to permit adequate access to the installation zone of the press to enable the operator to locate the workpiece in position, the ram must have a fairly long stroke between its fully retracted and fully extended positions. This gives rise to the problem of safeguarding the operators hands.

One solution is to provide a press guard which must be in position before the operator can initiate the working stroke of the ram but such an arrangement tends to reduce the installation speed because the guard must be repeatedly withdrawn and replaced.

Another solution involves designing the press so that the ram is of two-part construction comprising a hollow shaft to which a pneumatically-displaceable piston is secured and a rod received within the hollow shaft and displaceable therewith under the action of the pneumatic cylinder and piston. The hollow shaft forms a hydraulic cylinder accommodating a piston carried by the rod and the pneumatic and hydraulic piston and cylinders are actuated sequentially so that initially the shaft and rod are advanced by the pneumatic piston and cylinder from a retracted workpiece loading position to a fastener installing position and, upon reaching the latter position, the rod is advanced further by the hydraulic piston and cylinder to execute the installation stroke. Thus, with this arrangement the first stage of the ram travel is under pneumatic pressure and the pressure is designed so that it is insufficient to cause injury to the operator's hands or to damage an incoreectly located fastener. The second stage can only be initiated when the shaft/rod assembly has completed the first stage and at this point the gap between the shaft/rod and the anvil or workpiece is designed to be small enough to preclude the possibility of the operators hand or fingers becoming trapped. The second stage can therefore be executed under relatively large hydraulic pressure.

This latter solution overcomes the drawbacks associated with press guards but is a less economical solution because of the complex two-part design of the ram which entails one pressure cylinder operating within another with consequent production expense and difficulties in maintenance and servicing.

The present invention seeks to provide an alternative solution to the problem of safeguarding operation of a machine of the kind initially referred to in which the drawbacks of the prior art are eliminated or at least minimised.

3.

According to one aspect of the present invention a machine of the kind initially referred to is characterised in that the force-applying means is connected to said first member via a toggle linkage whose links are movable from a folded condition to a predetermined substantially colinear condition such that the first member advances towards or retracts from said second member in response to straightening or folding respectively of said links, and in that means is provided for maintaining said linkage in said predetermined condition to allow transmission of force from said force applying means to said first member but only when said linkage is in said predetermined condition.

Movement of the toggle linkage between its folded and colinear conditions may be effected manually or by low force applying means acting on the toggle linkage with a force of considerably smaller magnitude than that exerted by said large force applying means.

Preferably means are provided for sensing movement of the toggle linkage into said predetermined condition and preventing operation of said large force applying means until the linkage is in said predetermined condition.

According to a second aspect of the present invention we provide a machine for installing fasteners in workpieces comprising an anvil for location of a workpiece, a ram displaceable towards the anvil to effect a forward stroke, low force means for displacing the ram over a first part of its forward stroke and large force means for displacing the ram over the remaining part of its forward stroke, characterised in that the large force means is connected to the ram via a toggle linkage which translates operation of the low force means into displacement of the ram over said first part of its forward stroke until the linkage occupies a predetermined position in which it is constrained against hinging to enable it to transmit force from the large force means to the ram whereby the remainder of said forward stroke can be completed under the influence of said large force means acting through the toggle linkage.

4.

In the preferred embodiment the toggle linkage comprises a pair of pivotally connected links which are further pivoted to the large force means and the ram respectively and the low pressure means is connected to one of said links at a separate point adjacent the pivotal connection between the links, the arrangement being such that, when the low pressure means is retracted, the links are in an acute angled relation and, when the low pressure means is extended, the links are in an overcentre, almost colinear relation and co-operate with an abutment surface which maintains them in such relation until the low pressure means is retracted.

Preferably the links carry at least one roller element which is arranged to bear against said abutment surface when the links are in the overcentre relation thereby reducing frictional resistance when the links are displaced longitudinally by the large force means.

Conveniently, the low force means comprises a spring- loaded element acting on the toggle linkage to bias the same towards the overcentre position and a pneumatic cylinder arranged to hold the spring-loaded element retracted so that the toggle linkage is unable to transmit force from the large force means to the ram or first member, user-operable means being provided to disable said cylinder to allow extension of the piston rod thereof to take the toggle linkage overcentre and advance the ram over the first part of the forward stroke.

Preferably means is provided for sensing movement of the toggle linkage to said predetermined position and automatically actuating the large force means which may be a hydraulic cylinder whose piston is connected to the ram via the toggle linkage.

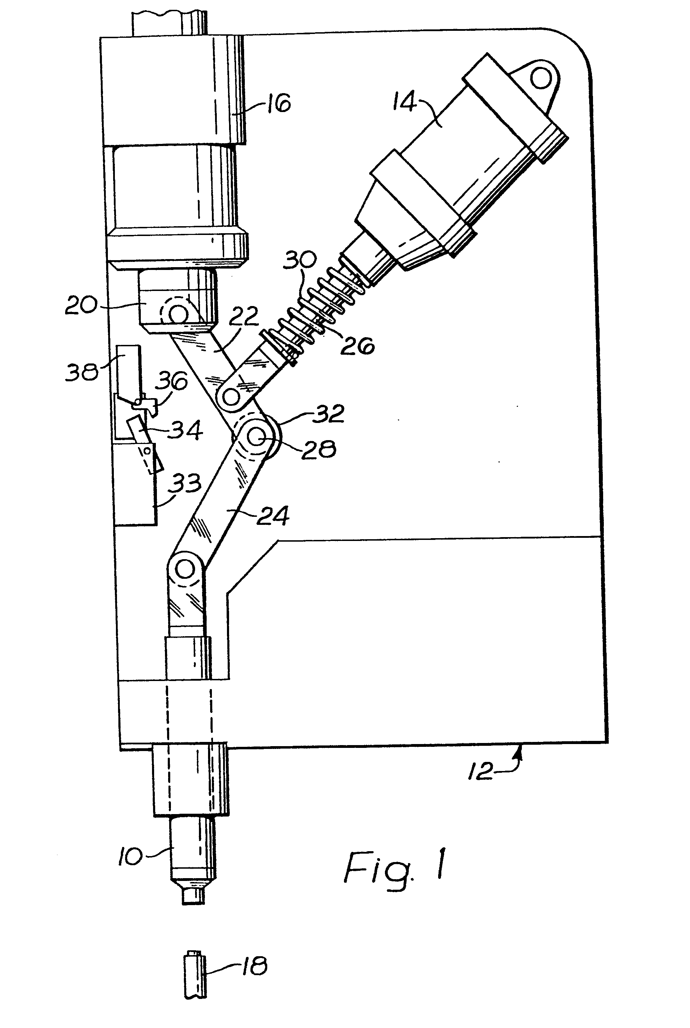

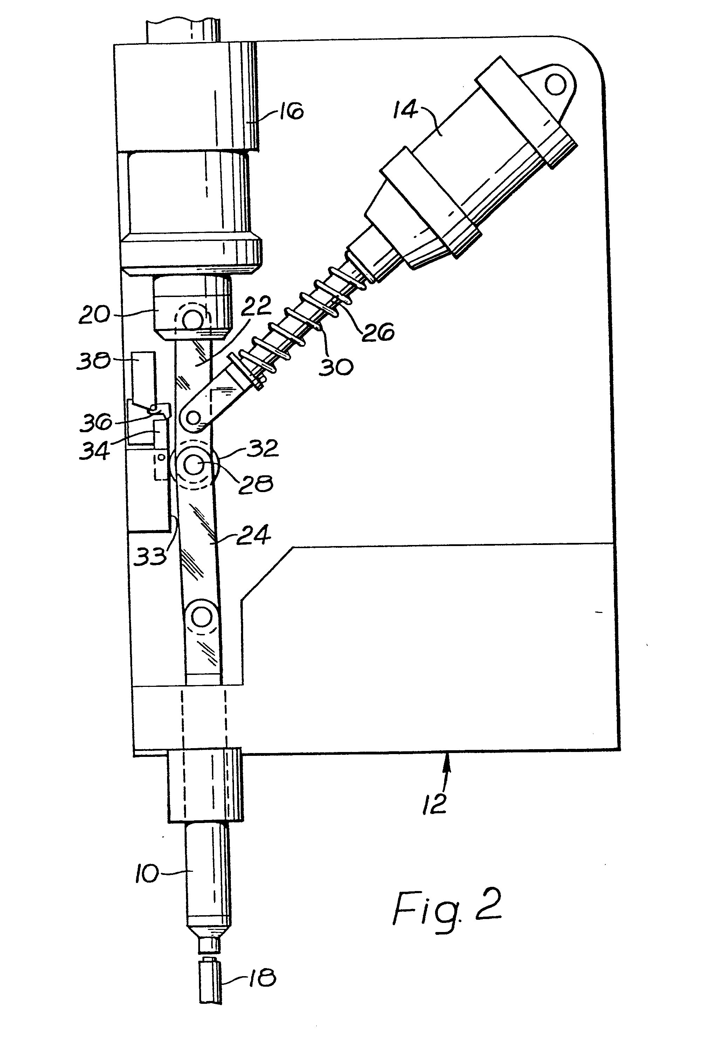

The invention will now be described by way of example with reference to the accompanying drawings of which Figures 1 and 2 respectively show a rivet installing machine in inoperative and operative positions.

As shown, the machine comprises a ram or punch 10 guided in a frame 12 for vertical reciprocable movement, under the control of pneumatic cylinder 14 and hydraulic cylinder 16, towards and away from a die 18. The punch 10 is connected to the piston 20 of the cylinder 16 via a toggle linkage comprising links 22, 24 which are normally folded relative to one another, as shown in Figure 1, to hold the punch in a retracted position to allow the user access to the space between the punch and die for the purpose of locating a workpiece in preparation for a rivetting operation.

A supply of rivets are fed one by one from for example a vibratory bowl feeder into the path of travel of the punch and suitable guide channels and feed mechanism (not shown) are provided to correctly locate the rivets for advance towards and installation into the workpiece by the punch. The linkage is held in the Figure 1 positon by the retracted piston rod 26 of cylinder 14. The rod 26 is coupled to the link 22 adjacent the pivotal connection 28 and is spring-loaded towards an extended position. When the air in cylinder 14 is exhausted, e.g. in response to operation of a foot pedal for effecting a rivetting operation, the spring 30 urges the rod 36 outwardly thereby causing the links to straighten and, in doing so, advance the punch downwardly. The arrangement is such that this advance portion of the stroke is completed when a roller 32 carried by pivot 28 abuts a guide surface 33 and, at this point, the links are slightly overcentre and the punch is in such close proximity to the die that the users fingers cannot become trapped between the punch and die. It will be noted that this advance position of the punch stroke takes place purely under the action of the spring 30 so that if the punch is impeded by the user's hand, no injury will result.

When the linkage reaches the Figure 2 position, the roller 32 engages a pivoted trip lever 34 which, in turn, operates an actuator 36 of valve 38 to supply hydraulic oil to the cylinder 16 whereby the working portion of the punch stroke is performed. Because the links 22, 24 are now constrained to remain in the overcentre position of Figure 2, the force developed by the cylinder

6.

16 can be transmitted to the punch via the linkage. During the downward movement of the linkage, it will be seen that the roller 32 runs along the guide surface 33.

Upon completion of the working stroke, i.e. installation of the fastener, the above sequence of operations is reversed to return the punch and toggle linkage back to the Figure 1 position, the cylinder 14 being operated at a suitable point in the reverse sequence to fold the linkage back from the overcentre position.

Although in the embodiment described above, movement of the toggle linkage between the positions of Figures 1 and 2 is effected by means of the spring-loaded and pneumatically controlled rod 26, it will be understood that the forces involved in moving the toggle linkage will be relatively small and that the positioning of the toggle linkage could be effected manually if desired. Also it is to be understood that the invention is applicable to other forms of machines, such as injection moulding machines, in which one of the working members undergoes an initial advancing movement into close proximity or contract with a second working member and is then subjected to a large force.

7.

CLAIMS

1. A machine comprising a first working member mounted on the machine for movement towards and away from a second working member, the first member being movable axially from a remote position to a position in which it is in close proximity or contact with said second member, and force-applying means operable when the first member is in close proximity or contact with said second member to apply a large force to said first working member, which force acts axially in a direction towards said second member, characterised in that the force-applying means is connected to said first member via a toggle linkage whose links are movable from a folded condition to a predetermined substantially collinear condition such that the first member advances towards or retracts from said second member in response to straightening or folding respectively of said links, and in that means is provided for maintaining said linkage in said predetermined condition to allow transmission of force from said force-applying means to said first member but only when said linkage is in said predetermined condition.

2. A machine as claimed in Claim 1 including low force-applying means for moving said toggle linkage between the aforesaid conditions to advance or retract said first member, such means acting on the toggle linkage with a force of considerably smaller magnitude than that exerted by said large force-applying means.

8.

3.   A machine as claimed in Claim 1 or 2 including means for sensing movement of the toggle linkage into said predetermined condition and preventing operation of said large force-applying means until the linkage is in said predetermined condition.

4.   A machine as claimed in Claim 1, 2 or 3 in which said predetermined condition corresponds to the toggle linkage being in an overcentre but substantially collinear condition in which the pivotal connection between the links co-operate with an abutment surface which allows the pivotal connection to slide axially.

5.   A machine for installing fasteners in workpieces comprising an anvil for location of a workpiece, a ram displaceable towards the anvil to effect a forward stroke, low force means for displacing the ram over a first part of its forward stroke and large force means for displacing the ram over the remaining part of its forward stroke, characterised in that the large force means is connected to the ram via a toggle linkage which translates operation of the low force means into displacement of the ram over said first part of its forward stroke until the linkage occupies a predetermined position in which it is constrained against hinging to enable it to transmit force from the large force means to the ram whereby the remainder of said forward stroke can be completed under the influence of said large force means acting through the toggle linkage.

6.   A machine as claimed in Claim 5 in which the toggle linkage comprises a pair of pivotally connected links which are further pivoted to the large force means and the ram respectively and the low pressure means is connected to one of said links at a separate point adjacent the pivotal connection between the links, the arrangement being such that, when the low pressure means is retracted, the links are in an acute angled relation and, when the low pressure means is extended, the links are in an overcentre, almost colinear relation and co-operate with an abutment surface which maintains them in such relation until the low pressure means is retracted.

9.

7.    A machine as claimed in Claim 4 or 6 in which the links carry at least one roller element which is arranged to bear against said abutment surface when the links are in the overcentre relation thereby reducing frictional resistance when the links are displaced longitudinally by the large force means.

8.    A machine as claimed in any one of Claims 2, 5, 6 and 7 in which the low force means comprises a spring-loaded element acting on the toggle linkage to bias the same towards the overcentre position and a pneumatic cylinder arranged to hold the spring-loaded element retracted so that the toggle linkage is unable to transmit force from the large force means to the ram or first member, user-operable means being provided to disable said cylinder to allow extension of the piston rod thereof to take the toggle linkage overcentre and advance the ram over the first part of the forward stroke.

9.    A machine as claimed in Claim 5,6,7 or 8 including means for sensing movement of the toggle linkage to said predetermined position and automatically actuating the large force-applying means.

10.    A machine as claimed in any one of the preceding claims in which the large-force applying means comprises a hydraulic cylinder whose axis is coaxial with the path of movement of the ram or first working member.

Fig. 1

Fig. 2

## EUROPEAN SEARCH REPORT

Application number

EP 79 301 431.7

| Category | DOCUMENTS CONSIDERED TO BE RELEVANT<br>Citation of document with indication, where appropriate, of relevant passages | Relevant to claim |
|---|---|---|
| X | DE - A - 1 926 105 (HILLER)<br>* claims 1, 2; page 4; fig. 1 *<br><br>-- | 1-3,<br>9 |
| | US - A - 2 298 852 (WARD)<br>* claims 1 to 3; fig. 1 *<br><br>-- | 1,2 |
| A | DE - C - 561 059 (PELS)<br>* complete document *<br><br>-- | |
| A | DE - A1 - 2 606 737 (STROUD)<br>* complete document *<br><br>-- | |
| A | CH - A - 464 696 (KIESERLING & ALBRECHT)<br>* complete document *<br><br>---- | |

**CLASSIFICATION OF THE APPLICATION (Int. Cl.3)**

B 21 J    9/18
B 21 J   15/22
B 30 B    1/16

**TECHNICAL FIELDS SEARCHED (Int.Cl.3)**

B 21 J    9/00
B 21 J   15/00
B 30 B    1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

X  The present search report has been drawn up for all claims

| Place of search | Date of completion of the search | Examiner |
|---|---|---|
| Berlin | 18-10-1979 | SCHLAITZ |

EPO Form 1503.1   06.78